# EUROPEAN PATENT SPECIFICATION

(11) **EP 2 959 773 B1**
(45) Date of publication and mention of the grant of the patent: **15.07.2020**
(21) Application number: 14754167.6
(22) Date of filing: 24.02.2014
(51) Int. Cl.: A01K 61/54, A01K 61/60

(54) **FLOATING STRUCTURE**
SCHWIMMENDE STRUKTUR
STRUCTURE FLOTTANTE

(30) Priority: 25.02.2013 ES 201330251
(43) Date of publication of application: 30.12.2015
(73) Proprietor: Española De Plataformas Marinas, S.L., 36645 Pontevedra (ES)
(72) Inventor: QUINTA CORTIÑAS, Andrés, 36645 Pontevedra (ES)
(74) Representative: Mewburn Ellis LLP
(86) International application number: PCT/ES2014/070135
(87) International publication number: WO 2014/128337

(56) References cited:
- ES-A1- 2 197 750
- ES-A1- 2 268 927
- ES-A1- 2 268 927
- ES-A1- 2 387 769
- ES-U- 1 063 493
- ES-U- 1 064 198
- FR-A1- 2 581 835
- FR-A1- 2 613 184
- JP-U- S62 111 367

## Description

### TECHNICAL FIELD

The invention refers to a structure for mariculture. More specifically, the present invention refers to a structure for mariculture with the aim of creating a marine platform where marine species can be cultivated. The structure can be used to build a floating platform or a platform that can be submerged in order to decrease the battering of waves so that the cultivation can be better preserved, and it can also be raised to the surface to farm it.

### BACKGROUND OF THE INVENTION

There are several commonly known floating structures comprising a framework of large girders, very large floats and nets or cages where marine species are confined so they can be cultivated. Occasionally, the frameworks incorporate ropes perpendicular to the framework, which sink in the water and where marine species grow, such as bivalve molluscs, mussels and oysters. In either of them, the weight of the cultivation puts a great flexing strain on the girders, causing traction and compression, shear strength on the support points in addition to torsion forces, which result in floating and stability problems as well as in cracking and breaking of the girders, that are normally caused by the deterioration of the materials comprising it and the links that connect them.

Several structures that have great floating capacity have been designed in order to fix these issues. These designs are based on using girders that are very resistant to outdoor conditions. The use of high density polythene is very widely spread in structures for mussel platforms, as shown, for example, in the document ES 2268927. Additionally, although there have been many attempts at improving the connecting links, the improvements up to date have not been definitive. Therefore, the common practice has been to use independent links made of synthetic plastic to connect the components of the framework of the mussel platforms, where these can be either the pieces with double fastening and fastening wires shown in the drawings of the aforementioned documents, or the connecting bolts going through the girders shown in either of the documents ES 1064198U or ES 1066093U. These designs have proven to be inefficient since, in addition to the constant adjustments that need to be made, the materials used frequently break due to tearing.

### OBJECT OF THE INVENTION

The present invention provides a floating structure as set forth in claim 1. One of the objects of the invention is to provide a new structure aimed at being used as a platform to grow marine species, which has characteristics that reduce or eliminate the problems highlighted, improving the operating efficiency and extending the life cycle of these platforms.

This aim is achieved by incorporating a first fastening part incorporated to the free end of the ties that extend obliquely upwards and outwards from the periphery of the metallic tubes, or first plurality of tubes that comprise the support girders of the framework, so that a second independent and complementary fastening part can encircle the periphery of the tubes that comprise the second plurality of tubes that need to be fastened to maintain the framework of the structure connected. Both the first and second fastening parts have a geometric design fitted to the periphery or the perimeter of the tubes comprising the second plurality of tubes that complete the framework of the structure.

### DESCRIPTION OF THE INVENTION

The present invention, as described in the wording of this description, refers to a structure for cultivating marine species used in aquaculture, that features significant improvements in comparison with current reticular structures, in particular regarding the links between the components that comprise the framework, avoiding torsions and twists of the structure, and therefore improving the resistance and handling of any floating or submersible platform used in this field.

The design of the structure features metallic tubes closed at the ends that can be compartmentalised when they are used in submersible platforms, combined with tubes made up of materials resistant to outdoor conditions such as high density polythene, although other polymer plastics, metals or metal alloys could also potentially be used. The preferred choice of links for the structure is to put ties on the metallic tubes in order to give them a first fastening part, which receives a peripheral part of the plastic tube that it will support, completed by a second fastening part that can be easily added to or removed from the peripheral part of the plastic tube where it is set on and fastened to, aided by the first fastening part and by means of the interposition of elastic joints, since the assembly is done by means of screws or similar linking components.

Different configurations, cross sections and arrangement of the girders have been considered in order to pre-empt and solve the problems derived from the stresses that the structure can be subjected to; therefore, it is estimated that, preferably though not exclusively, the tubular configuration of regular circular section is the most appropriate one for the girders that comprise the main floating members or first plurality of tubes of the structure, and also for the girders that comprise the cross members or second plurality of tubes of the structure; although the cross members could be solid instead of hollow and adopt a flat configuration since this makes it easier for the working staff to walk on the structure.

The layout of the ties on the main girders, or the first plurality of tubes of the structure, together with the fastening parts linked to it, ensures that the waterline of the structure is set below half of its thickness, and the torsion stresses that the tubes tend to suffer are compensated by the downwards vertical push caused by the weight of the marine species cultivated.

The vibrations that the movement of the waves in the water transmit to the structure are absorbed by the joints interposed between the fastening parts connected to the ends of the ties of the first plurality of tubes and the tubes of the second plurality of tubes that make the system rigid, thus decreasing the accumulation of breaking tensions in the connecting points between the tubes.

More precisely, the floating structure comprises a first plurality of tubes, a second plurality of tubes that maintains the tubes of the first plurality of tubes parallel and equidistant along their lengths, and the first and second pluralities of tubes are connected by linking components in order to form a reticular structure.

Each tube of the first plurality of tubes has an alignment of pairs of ties that extend from the periphery thereof. The ties of each pair of ties extend obliquely outwards facing each other on both ends of a line that extends across the longitudinal axis of the tube of the first plurality of tubes, and parallel above the horizontal plane that divides it into two semi cylindrical parts. The pairs of ties on each tube of the first plurality of tubes are preferably equidistant.

One of the characteristics of the invention is that the ties feature a first fastening part connected on their free end, aligned across the longitudinal axis of the tube of the first plurality of tubes and designed with a concavity fitted to the immediate lower part of the tubular component of the second plurality of tubes that needs to be fastened.

Said first fastening part is complemented, according to the invention and as stated in independent claim 1, by at least a second fastening part, designed with a complementary concavity in order to encircle the remaining periphery of said immediate part of the tubular component of the second plurality of tubes.

In one of the embodiments, said first fastening part can be connected to the free end of each of the ties of the pair of ties, and extended in a given length that is bigger than the thickness of the tie. It is also evident, according to the invention, that said first fastening part extends lengthwise between both ends of the ties in each pair of ties, although for the sake of economy, the second fastening parts are preferably similar in length, albeit longer than the thickness of the ties.

A preferred embodiment of the invention establishes that both the first and second fastening parts are dismountably connected, which makes it easier to repair or replace the main components of the structure.

Additionally, the floating structure may feature laminar joints or other kinds of parts that absorb the vibrations between the first and second fastening parts and the peripheral part of the tube they encircle.

In light of what has been explained above, it is evident that in order to use the platform for mariculture, the structure should be complemented with tops or clasps fitted on its ends, and all or part of the tubes that comprise the main or the cross girders of the structure should be compartmentalised by means of partitions, and, so that it can also be used as a submersible platform, it should be fitted with a valve system that can selectively bale out or flood each compartment. The structure can also be complemented with bars or other supports for mariculture ropes, nets or cages, or with gangways for the workmen, lateral fastening reinforcements or other components common in these types of platforms, and depending on the case, with storage facilities, transporters or growth controllers, among other things.

### DESCRIPTION OF THE DRAWINGS

One of the embodiments, without limitation, of a floating structure is shown in the attached drawings, wherein:
Figure 1 is a plane view of a structure for mariculture according to the invention.
Figure 2 is an elevation view of the structure for mariculture as shown on Figure 1;
Figure 3 shows, on a bigger scale, a detailed view of a part of the structure shown on the elevation view, detailing the fastening section.
Figure 4 shows, on a bigger scale, a detailed view of a part of the structure shown from a profile view, in order to display the components of the tie.
Figure 5 is a perspective view in detail showing a part of a tube of the first plurality of tubes and the link by means of its ties to the tubular component of the second plurality of tubes.

### PREFERRED EMBODIMENT OF THE INVENTION.

In the preferred embodiment of the invention, the floating structure is designed with materials that are especially resistant to marine degradation, such as polythene and/or metal alloys, and is presented as a structure that should be complemented in order to be used for mariculture as a floating structure.

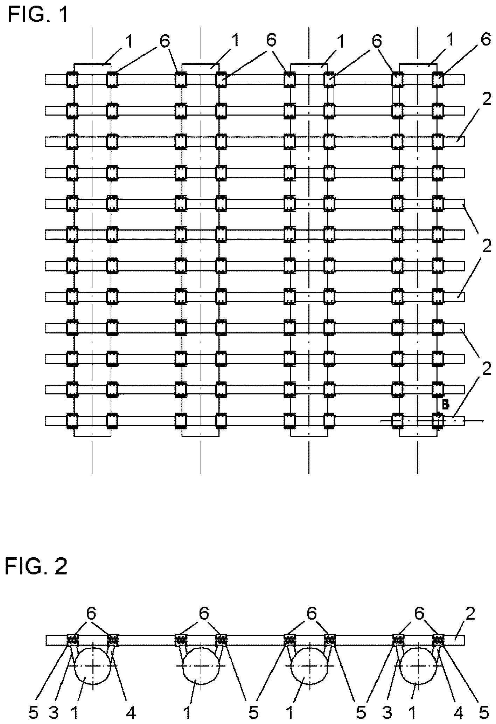

More precisely and in reference to the drawings, in particular to figures 1 to 3, the floating structure is comprised of hollow main members or first plurality of tubes (1) and of secondary members or second plurality of tubes (2) of a smaller diameter, and where the first (1) and second (2) pluralities of tubes are connected together.

More precisely and in reference to figure 1 and 2, they show that each tube (1) of the first plurality of tubes (1) has an alignment of pairs of ties (3, 4) on the periphery thereof.

In the example, the ties (3, 4) of each pair of ties (3,4) are shown extending from the semi cylindrical part above the tubes (1) and on both ends of an imaginary line that extends across the longitudinal axis of each tube (1), and parallel above the horizontal plane that divides it into two semi cylindrical parts.

As shown on figure 1, the pairs of ties (3, 4) of each tube (1) are equidistant.

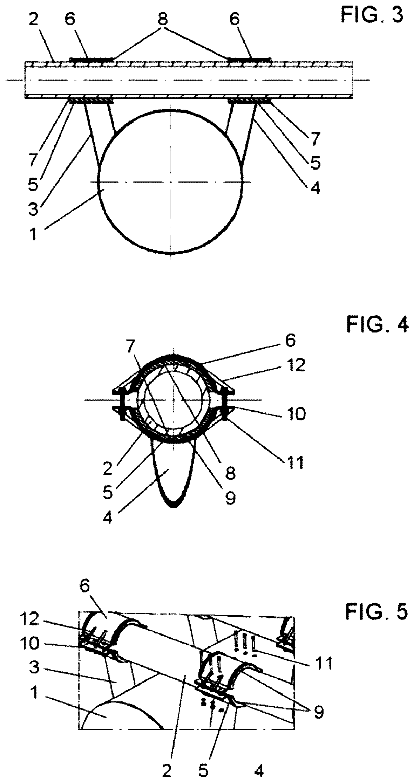

In the example given, as shown on figure 3, each tie (3) or (4) shows a first (5) fastening part connected at its upper end, which is aligned across the longitudinal axis of the tube (1) of the first plurality of tubes and designed with a concavity (7) fitted to the immediate lower part of the tubular component (2) of the second plurality of tubes that needs to be fastened.

Figure 4 shows more accurately how the first (5) fastening part is complemented by a second (6) fastening part, also designed with a complementary concavity (8) fitted to the periphery of the immediate upper part of the tubular component (2) of the second plurality of tubes that needs to be fastened. Between the respective concavities (7, 8) of both the first (5) and second (6) parts, a peripheral part of the tubular component (2) of the second plurality of tubes can be seen, though interposed by their respective laminar joints (9).

In the example, both the first (5) and second (6) fastening parts have been provided with tabs (10) with holes bored into them in order to secure them using screws and nuts or other conventional components (11) that can provide and maintain the level of fastening required and that can be easily mounted or dismounted, in addition to incorporating other components to reinforce them, such as rods (12).

The invention has been described according to the embodiment shown in the drawings. It is possible to add modifications or replacements, and some of the stages or operations described can also be modified or eliminated, none of which will go beyond the scope of the invention as defined by the appended claims.

## Claims

1. FLOATING STRUCTURE featuring a first plurality of hollow tubes (1) closed at the ends and compartmentalised, a second plurality of hollow tubes (2) that maintains the tubes (1) of the first plurality of tubes (1) parallel and equidistant along their lengths, and the first (1) and second (2) pluralities of tubes are connected by linking components in order to form a reticular structure, where each tube (1) of the first plurality of tubes (1) has an alignment of pairs of ties (3, 4) that extend from the periphery thereof; the ties of each pair of ties (3, 4) face each other on both ends of a line that extends across the longitudinal axis of the tube (1) of the first plurality of tubes (1), and parallel above the horizontal plane that divides it into two semi cylindrical parts; the pairs of ties of each tube (1) of the first plurality of tubes (1) are equidistant;
**characterised in that**
the ties (3,4) feature a first (5) fastening part connected at their free end, aligned across the longitudinal axis of the tube (1) of the first plurality of tubes (1) and designed with a concavity (7) fitted to the immediate lower part of the tubular component (2) of the second plurality of tubes (2) that needs to be fastened;
and **in that**
said first (5) fastening part is complemented by at least a second (6) fastening part, designed with a complementary concavity (8) in order to encircle the remaining periphery of the immediate upper part of the tubular component of the second plurality of tubes (2).

2. FLOATING STRUCTURE, according to the previous claim,
**characterised in that** said first (5) and second (6) fastening parts are dismountably connected.

3. FLOATING STRUCTURE, according to the previous claims,
**characterised in that** it features shock absorbing laminar parts (9) laid out between said first (5) and second (6) fastening parts and the peripheral part of the tubular component (2) of the second plurality of tubes (2) they encircle.

## Patentansprüche

1. Schwimmende Struktur, die Folgendes umfasst: eine erste Vielzahl von hohlen Rohren (1), die an den Enden verschlossen und unterteilt sind, eine zweite Vielzahl von hohlen Rohren (2), die die Rohre (1) der ersten Vielzahl von Rohren (1) zueinander parallel und gleich beabstandet entlang ihrer Länge hält, wobei die erste (1) und die zweite (2) Vielzahl von Rohren durch Verbindungskomponenten verbunden sind, um eine gitterartige Struktur zu bilden, wobei jedes Rohr (1) der ersten Vielzahl von Rohren (1) eine Anordnung von Paaren von Verbindungsgliedern (3, 4) aufweist, die sich von dessen Umfang erstrecken; wobei die Verbindungsglieder aus jedem Paar von Verbindungsgliedern (3, 4) einander an beiden Enden einer Geraden zugewandt sind, die sich quer zur Längsachse des Rohrs (1) der ersten Vielzahl von Rohren (1) und parallel oberhalb der horizontalen Ebene erstreckt, die es in zwei halbzylinderförmige Teile teilt; wobei die Paare von Verbindungsgliedern jedes Rohrs (1) der ersten Vielzahl von Rohren (1) gleich beabstandet sind;
**dadurch gekennzeichnet, dass**
die Verbindungsglieder (3, 4) einen ersten (5) Befestigungsteil umfassen, der an ihrem freien Ende verbunden ist, quer zur Längsachse des Rohrs (1) der ersten Vielzahl von Rohren (1) ausgerichtet ist und mit einer Einbuchtung (7) ausgestattet ist, die an den unmittelbar unteren Teil der rohrförmigen Komponente (2) der zweiten Vielzahl von Rohren (2) angepasst ist, die zu befestigen ist;
und dass
der erste (5) Befestigungsteil durch zumindest einen zweiten (6) Befestigungsteil ergänzt wird, der mit einer komplementären Einbuchtung (8) ausgestattet ist, um den Rest des Umfangs des unmittelbar oberen Teils der rohrförmigen Komponente der zweiten Vielzahl von Rohren (2) zu umschließen.

2. Schwimmende Struktur nach dem vorhergehenden Anspruch, **dadurch gekennzeichnet, dass** der erste (5) und der zweite (6) Befestigungsteil abnehmbar verbunden sind.

3. Schwimmende Struktur nach den vorhergehenden Ansprüchen, **dadurch gekennzeichnet, dass** sie stoßdämpfende Laminarteile (9) aufweist, die zwischen dem ersten (5) und dem zweiten (6) Befestigungsteil und dem Umfangsteil der rohrförmigen Komponente (2) der zweiten Vielzahl von Rohren (2), den diese umschließen, aufgelegt sind.

## Revendications

1. Structure flottante comportant une première pluralité de tubes creux (1) fermés aux extrémités et compartimentés, une seconde pluralité de tubes creux (2) qui maintient les tubes (1) de la première pluralité de tubes (1) parallèles et équidistants sur leurs longueurs, et les première (1) et seconde (2) pluralités de tubes sont connectées par des composants de liaison afin de former une structure réticulaire, où chaque tube (1) de la première pluralité de tubes (1) a un alignement de paires d'attaches (3, 4) qui s'étendent depuis sa périphérie ; les attaches de chaque paire d'attaches (3, 4) se font face aux deux extrémités d'une ligne qui s'étend à travers l'axe longitudinal du tube (1) de la première pluralité de tubes (1), et parallèle au-dessus du plan horizontal qui le divise en deux parties semi-cylindriques ; les paires d'attaches de chaque tube (1) de la première pluralité de tubes (1) sont équidistantes ;
**caractérisé en ce que**
les attaches (3,4) présentent une première partie de fixation (5) connectée à leur extrémité libre, alignée sur l'axe longitudinal du tube (1) de la première pluralité de tubes (1) et conçue avec une concavité (7) ajustée à la partie inférieure immédiate du composant tubulaire (2) de la seconde pluralité de tubes (2) qui doit être fixé ;
et **en ce que**
ladite première partie de fixation (5) est complétée par au moins une seconde partie de fixation (6), conçue avec une concavité complémentaire (8) pour encercler la périphérie restante de la partie supérieure immédiate du composant tubulaire de la seconde pluralité de tubes (2).

2. Structure flottante selon la revendication précédente, **caractérisée en ce que** lesdites première (5) et seconde (6) parties de fixation sont connectées de manière démontable.

3. Structure flottante selon les revendications précédentes, **caractérisée en ce qu'**elle comporte des parties laminaires d'absorption de choc (9) disposées entre lesdites première (5) et seconde (6) parties de fixation et la partie périphérique du composant tubulaire (2) de la seconde pluralité de tubes (2) qu'elles encerclent.
